Europäisches Patentamt

European Patent Office

Office européen des brevets

(19)

(11) Veröffentlichungsnummer : **0 134 498**
**B1**

(12) **EUROPÄISCHE PATENTSCHRIFT**

(45) Veröffentlichungstag der Patentschrift :
30.09.87

(21) Anmeldenummer : 84108201.9

(22) Anmeldetag : 12.07.84

(51) Int. Cl.⁴ : **F 42 B 23/24**, F 16 F  1/08,
F 16 F  3/04

(54) **Haubenförmige Abdeckung von Hohlladungsminen.**

(30) Priorität : 24.08.83 DE 3330502

(43) Veröffentlichungstag der Anmeldung :
20.03.85 Patentblatt 85/12

(45) Bekanntmachung des Hinweises auf die Patenterteilung : 30.09.87 Patentblatt 87/40

(84) Benannte Vertragsstaaten :
**AT BE CH DE FR GB IT LI NL SE**

(56) Entgegenhaltungen :
**DE-A- 1 900 052**
**DE-A- 3 131 691**
**US-A- 3 015 482**

(73) Patentinhaber : **DYNAMIT NOBEL AKTIENGESELLS-**
**CHAFT**
**Postfach 1209**
**D-5210 Troisdorf, Bez. Köln (DE)**

(72) Erfinder : **Alker, Erich**
**Saaler Strasse 30**
**D-5060 Bergisch-Gladbach 1 (DE)**

EP 0 134 498 B1

## Beschreibung

Die Erfindung betrifft eine haubenförmige Abdeckung von Hohlladungsminen gemäß dem Oberbegriff von Anspruch 1.

Hohladungen enthaltende Minen, sog. Hohlladungsminen, weisen — wie in der DE-A-28 40 362 beschrieben — üblicherweise eine haubenförmige Abdeckung auf, um den Kalottenbereich der Hohlladung von Fremdkörpern, wie z. B. Sand, Wasser, Eis, freizuhalten und gegebenenfalls den Aufprall der Mine auf dem Boden zu dämpfen, wenn diese aus der Luft abgeworfen wird. In der Ausgangsstellung, z. B. während der Lagerung und des Transports, ist die haubenförmige Abdeckung zusammengelegt, -gedrückt, eingestülpt od. dgl. Gemäß der DE-A-31 31 691, von der im Oberbegriff des Anspruchs 1 ausgegangen wird, wird die haubenförmige Abdeckung mittels einer kegelstumpfförmigen Druckfeder in die Funktionsstellung überführt, wobei die Abdeckung schalen-, kalottenförmig od. dgl. ausgestellt wird.

Die bekannten haubenförmigen Abdeckungen mit einteiligen kegelstumpfförmigen Federn weisen die Nachteile auf, daß die Ausstellkraft der einteiligen Kegelstumpffeder insbesondere bei tiefen Temperaturen nicht voll befriedigt und daß es zu Nebeneinschlägen auf der der Mine zugewandten Oberfläche des Zielobjekts kommen kann, wie Versuche bestätigt haben. Diese Streuung entsteht durch eine Ablenkung des Hohlladungsstrahls und führt zu einer verminderten Durchschlagleistung.

Aus der US-A-3 015 482 ist weiterhin eine Federeinrichtung bekannt, bei der zwei ringförmige inaktive Elemente gleichen Durchmessers, die im Abstand voneinander angeordnet sind, durch zwei oder mehrere federnde, schraubenlinienförmig gewundene Abschnitte miteinander verbunden sind. Damit soll erreicht werden, daß die axiale Federkraft längs des Umfangs der ringförmigen Elemente möglichst konstant und sich möglichst wenig mit der Zusammenpressung der Federkraft ändert. Diese Federeinrichtung wird angewandt, um zum Beispiel bei im Abstand voneinander angeordneten Metallteilen auch bei wechselnden Temperaturen einen möglichst konstanten Federdruck ausüben.

Aufgabe der Erfindung war es, eine haubenförmige Abdeckung zu entwickeln, deren Feder auch bei tiefen Temperaturen eine ausreichende Ausstellung der Abdeckung bewirkt und die in der Funktionsstellung der Abdeckung die Ausbildung des Hohlladungsstrahls nach Zündung der Mine oder des entsprechenden Wirkkörpers möglichst wenig beeinträchtigt, um eine Minderung der Durchschlagleistung zu vermeiden.

Die Aufgabe wurde gemäß dem Kennzeichen von Anspruch 1 gelöst. Es wurde erkannt, daß bei der bisherigen Lösung die erste, der Hohlladung zugekehrte Windung der Kegelstumpffeder einseitig und mit einer zu geringen Steigung in den in der Funktionsstellung beispielsweise kalottenförmig ausgebildeten Hohlraum der Abdeckung eintritt. Dabei kommt es zu einer Konzentration des Federdrahts in diesem Bereich, die eine Ablenkung des Hohlladungsstrahls mit den genannten, unerwünschten Folgen (Nebeneinschläge, verminderte Durchschlagleistung) bewirkt.

Die Erkenntnis über die Ursachen der bisherigen unbefriedigenden Lösung führte zur erfindungsgemäßen Ausbildung der Druckfeder. Diese Lösung weist folgende Vorteile auf : Die Druckfeder ist in allen vertikalen Schnittebenen symmetrisch. Dadurch werden seitliche Ablenkungen des Hohlladungsstrahls vermieden. Die Federmasse konnte durch Teilung der Feder (geringere Gesamtlänge) um ca. 25 % verringert werden. Die Federkraft, welche die Ausstellung der haubenförmigen Abdeckung bewirkt, wurde durch die Teilung der Feder erhöht, da hierdurch mehrere federnde Windungen entstehen. Durch Erhöhung der Steigung des mittleren Windungsabschnitts der Feder zumindest in dem sich an den äußeren Windungsabschnitt anschließenden Bereich wurde die Federdrahtansammlung im Fußbereich der haubenförmigen Abdeckung (in Funktionsstellung der Hohlladung zugewandten Seite der Abdeckung) vermindert, wodurch die Gefahr der Ablenkung des Hohlladungsstrahls weiter verringert wurde.

Die Befestigung des inneren Windungsabschnitts der Druckfeder in einer umlaufenden Nut der Abdeckung gemäß Anspruch 2 ist eine bevorzugte Ausbildung der Erfindung. Sie vereinfacht die Montage gegenüber der bisherigen Lösung, bei der z. B. die Feder mit der Abdeckung verklebt war.

Die Erfindung wird nachfolgend anhand eines in der Zeichnung teilweise schematisch, in unterschiedlichem Maßstab dargestellten Ausführungsbeispiels näher beschrieben.

Es zeigen

Figur 1   ein Teil einer Druckfeder in der Draufsicht,

Figur 2   eine Ansicht des Teils gemäß Fig. 1,

Figur 3   einen Längsschnitt durch eine haubenförmige Abdeckung mit Druckfeder,

Figur 4   eine Ansicht von unten einer haubenförmigen Abdeckung mit eingesetzter zweiteiliger Druckfeder,

Figur 5   zum Vergleich eine bisher verwendete Kegelstumpffeder in der Draufsicht.

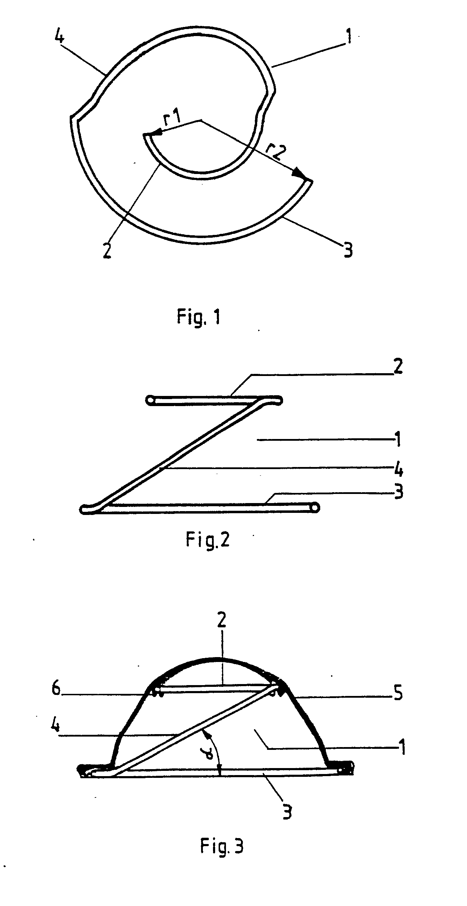

In Fig. 1 ist das eine Teil einer erfindungsgemäßen geteilten Druckfeder gezeigt. Vorzugsweise besteht die Druckfeder aus zwei Teilen 1, jedoch kann die Druckfeder auch aus mehr als zwei Teilen zusammengesetzt sein. Das Teil 1 weist einen äußeren, kreisbogenförmigen Windungsabschnitt 3, welcher dem Fußbereich der Abdeckung zugeordnet ist, einen sich daran anschließenden mittleren Windungsabschnitt 4 mit veränderbarem Krümmungsradius und einen ebenen inneren kreisbogenförmigen Windungsabschnitt 2, welcher denselben Krümmungsmittelpunkt wie der äußere Windungsabschnitt 3 hat, auf. Aus den in Fig. 1 angegebenen Radien $r_1$, $r_2$ geht hervor, daß die Windungsabschnitte 2 und 3 denselben Krümmungsmittelpunkt haben. Das Teil 1 besteht z. B. aus Stahl- Federdraht. Die dargestellten Teile 1 sind, vom äußeren Windungsabschnitt 3 zum inneren Windungsabschnitt 2 gesehen, im Uhrzeigersinn gewickelt. Die erfindungsgemäßen Teile 1 der Druckfeder können jedoch auch die entgegengesetzte Wickelrichtung aufweisen.

In Fig. 2 ist das Teil 1 in der Ansicht im nicht in die haubenförmige Abdeckung eingebauten Zustand dargestellt. Die Bezugszeichen und die damit bezeichneten Teile haben dieselbe Bedeutung wie zu Fig. 1 erläutert.

Fig. 3 zeigt im Längsschnitt eine haubenförmige Abdeckung 5 mit dem Teil 1 der Druckfeder in Funktionsstellung. In dieser Darstellung ist die Halterung des inneren Windungsabschnitts 2 in einer umlaufenden Nut 6 erkennbar. Des weiteren ist die Steigung $\alpha$ des mittleren Windungsabschnitts 4 dargestellt, welche gegenüber dem äußeren Windungsabschnitt 3 gemessen wird.

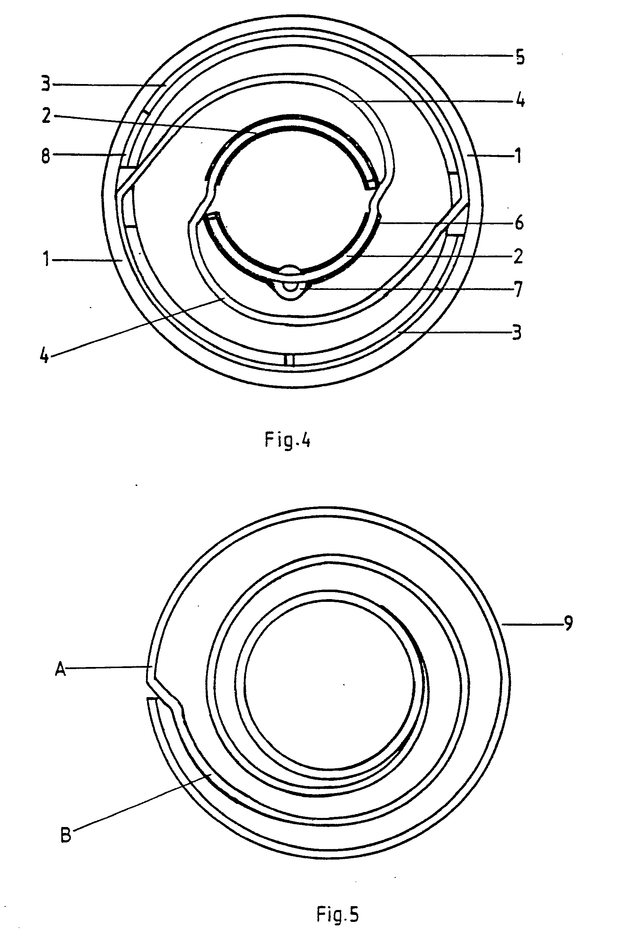

In Fig. 4 ist die Anbringung der Druckfeder in der haubenförmigen Abdeckung 5 schematisch dargestellt. Die Druckfeder besteht hier aus zwei Teilen 1. Diese werden mit ihrem inneren Windungsabschnitt 2 in der umlaufenden Nut 6 gehalten, mit ihrem äußeren Windungsabschnitt 3 in einer umlaufenden Nut 8. Aus Fig. 4 geht hervor, daß die Druckfeder in allen vertikalen Schnittebenen symmetrisch ist. Es handelt sich hierbei um eine Spiegelsymmetrie in Bezug auf die Längsachse der Druckfeder. In der Figur ist noch ein Belüftungsventil 7 bzw. die dafür vorgesehene Öffnung dargestellt. Des weiteren ist der mittlere Windungsabschnitt 4 des Teils 1 erkennbar.

Fig. 5 zeigt zum Vergleich eine bisher zur Ausstellung haubenförmiger Abdeckungen verwendete Kegelstumpffeder 9. Aus der Figur ist zu entnehmen, daß im Bereich zwischen den Punkten A und B die Federdrahtansammlung besonders groß ist. Diese wurde als Ursache für die Ablenkung des Hohlladungsstrahls erkannt und durch die Entwicklung der erfindungsgemäßen Druckfeder u. a. vermieden.

**Patentansprüche**

1. Haubenförmige Abdeckung (5) von Minen oder entsprechenden militärischen Wirkkörpern, die in ihrer Ausgangsstellung zusammengelegt, -gedrückt, eingestülpt oder dgl. ist, in ihrer Funktionsstellung mittels einer Druckfeder schalenkalottenförmig oder dgl. ausgestellt ist und die wenigstens eine Belüftungseinrichtung aufweist, dadurch gekennzeichnet, daß die Druckfeder aus mindestens zwei separaten, identischen Teilen (1) besteht, die in der Abdeckung (5) so angeordnet sind, daß die Druckfeder um ihre Längsachse einen spiegelsymmetrischen Verlauf aufweist, wobei das einzelne Teil (1) einen ebenen äußeren, kreisbogenförmigen Windungsabschnitt (3), einen sich daran anschließenden mittleren Windungsabschnitt (4) mit veränderbarem Krümmungsradius und einen ebenen inneren, kreisbogenförmigen Windungsabschnitt (2), welcher den selben Krümmungsmittelpunkt wie der äußere Windungsabschnitt (3) hat und wobei dessen Krümmungsradius ($r_1$) gegenüber dem ($r_2$) des äußeren Windungsabschnitts (3) sich axialversetzt auf der Längsachse der Druckfeder befindet, aufweist und die Steigung ($\alpha$) des mittleren Windungsabschnitts (4) zumindest in dem sich an den äußeren Windungsabschnitt (3) anschließenden Bereich in der Funktionsstellung der Druckfeder zwischen 15° bis 45° beträgt.

2. Abdeckung mit Druckfeder nach Anspruch 1, dadurch gekennzeichnet, daß der innere Windungsabschnitt (2) der Druckfeder in einer umlaufenden Nut (6) der Abdeckung (5) gehalten ist.

**Claims**

1. Cap shaped covering (5) of mines or corresponding military active bodies, which is folded up, compressed, turned inside out or the like in its starting position, is placed in its operating position in dished, hemispherical or the like form by means of a compression spring and which possesses at least one air outlet opening, characterised in that the compression spring consists of at least two separate identical parts (1) which are so arranged in the covering (5) that the compression spring exhibits development of mirror symmetry about its longitudinal axis, with the individual part (1) having a flat outer circular arc shaped' turn section (3), a middle turn section (4) connected thereto with changing radius of curvature and a flat inner circular arc shaped turn (2) which has the same centre of curvature as the outer turn section (3) and with its radius of curvature ($r_1$) being axially displaced on the longitudinal axis of the compression spring, with respect to that ($r_2$) of the outer turning section (3), and the inclination ($\alpha$) of the middle turn section (4) amounting to between 15° to 45°, at least in the region in the operating position of the compression spring adjoining the outer turn section.

2. Covering with compression spring according to claim 1, characterised in that the inner turn section (2) of the compression spring is held in a surrounding groove (6) of the covering (5).

**Revendications**

1. Couvercle (5) en forme de coiffe pour mines ou engins offensifs militaires correspondants, ce couvercle étant replié, comprimé, enfoncé ou analogue à sa position initiale, déployé en forme de coque, de calotte ou analogue au moyen d'un ressort de pression à sa position de fonctionnement et comprenant au moins un dispositif d'aération, caractérisé par le fait que le ressort de pression se compose d'au moins deux parties identiques séparées (1) qui sont disposées dans le couvercle (5) de manière que le ressort de pression présente un tracé symétrique autour de son axe longitudinal, la partie individuelle (1) comprenant une section de spire externe plane (3) en forme d'arc de cercle, une section de spire médiane (4) à rayon de courbure variable s'y raccordant et une section de spire interne plane (2) en forme d'arc de cercle qui a le même centre de courbure que la section de spire externe (3) et dont le rayon de courbure ($r_1$) se trouve axialement décalé par rapport à ($r_2$) de la section de spire externe (3) sur l'axe longitudinal du ressort de pression, le pas ($\alpha$) de la section de spire médiane (4) étant compris entre 15° à 45° ; tout au moins dans la zone se rattachant à la section de spire externe (3), à la position de fonctionnement du ressort de pression.

2. Couvercle avec ressort de pression selon la revendication 1, caractérisé par le fait que la section de spire interne (2) du ressort de pression est fixée dans une rainure périphérique (6) du couvercle (5).

Fig. 1

Fig. 2

Fig. 3

Fig.4

Fig.5